Europäisches Patentamt

European Patent Office

Office européen des brevets

(19)

(11) Publication number: **0 317 677**

**A1**

(12) # EUROPEAN PATENT APPLICATION

(21) Application number: **87310503.5**

(22) Date of filing: **27.11.87**

(51) Int. Cl.⁴: **G01N 35/04**

Amended claims in accordance with Rule 86 (2)
EPC.

(43) Date of publication of application:
**31.05.89 Bulletin 89/22**

(84) Designated Contracting States:
**AT BE CH DE ES FR GB GR IT LI LU NL SE**

(71) Applicant: **Hydro Fertilizers Ltd
11 Albemarle Street
London W1X 3HE(GB)**

(72) Inventor: **Wright, Peter
22 Glenfield Avenue
Felixstowe Suffolk IP11 9JL(GB)**

(74) Representative: **Dummett, Thomas Ian Peter
et al
Dummett Copp & Co. 14 The Square
Martlesham Heath Ipswich Suffolk, IP5
7SL(GB)**

(54) **Sample presentation.**

(57) The invention relates to a method for presenting a sample, notably a soil sample, in a holder 3 to a work station A, B, C, D, E, F at which some function is to be performed on the sample, which method comprises transporting sample holders 3 around an overall path so as to bring individual sample holders 3 into register in sequence with one or more work stations A, B, C, D, E, F co-operating with the path of travel characterised in that:

a). the sample holders 3 are transported around the path of travel as at least two discrete groups of at least two sample holders 3 in each discrete group;

b). in that each discrete group of sample holders 3 is re-orientated with respect to the path of travel independently of the other groups of sample holders 3 whereby individual sample holders 3 within that discrete group are caused to traverse different selected tracks within the overall path of travel of the said discrete group; and

c). in that the orientation of the sample holders 3 in the said discrete group is altered at least once during each complete circuit of the path by the discrete group whereby a sample holder 3 in the said group is caused to traverse a different track within the overall path upon successive circuits of the path.

# SAMPLE PRESENTATION

The present invention relates to a method and apparatus for presenting samples for analysis and/or testing.

In many test or analysis procedures, samples are presented to a work station at which the sample is drawn off for analysis or a reagent is added to produce some change in the sample which is measured. Typically, a sample is held in a test tube, glass cell or similar small container and these are presented to the work station by being carried on a moving belt or the like. Where a large number of samples are being handled, it has been proposed, for example in the Technicon type of apparatus, to locate each sample tube in a recess or aperture in a rotating table so that the samples are carried past the work station in a known sequence. Such a system is suitable for small sized sample holders since they can be mounted in close proximity to one another around one or more circumferential tracks on the rotating table. It has also been proposed to carry the sample holders in a grid configuration upon a rectangular table which is moved in the x and y axes to bring successive samples into register with the work station.

Both such systems are in widespread use for small sample carriers, typically 10 mls or less. However, they require accurate control to ensure that the sample carrier is correctly located at the work station, which involves complex control mechanisms; and they are impracticable for use with large sample carriers. Thus, where a soil analysis is carried out, it is often necessary to use up to 100 ml samples. These require the use of plastic cup sample holders which cannot be carried on the conventional rotating table or x/y axis linear movement table without the use of massive constructions. Furthermore, these devices are not suitable for carrying out a number of tests on the samples.

We have devised a method of presenting large sized sample carriers to a work station which reduces the problems of size and enables a number of different tests to be carried out on each sample. The method also uses apparatus operating on simple mechanical principles which makes it simple and cheap to construct and operate. The method and apparatus of the invention find use wherever it is desired to present a number of samples in sequence to one or more work stations, regardless of the size of the sample. Furthermore, because of the simplicity of the method of operation and the mechanisms required, the invention enables complex analytical procedures to be operated in areas where skilled operators and skilled service engineers are not available, notably in developing countries.

Accordingly, the present invention provides a method for presenting a sample in a holder to a work station at which some function is to be performed on the sample, which method comprises transporting sample holders around an overall path so as to bring individual sample holders into register with one or more work stations co-operating with the path of travel characterised in that:

a). the sample holders are transported around the path of travel as at least two discrete groups of at least two sample holders in each discrete group;

b). in that each discrete group of sample holders is re-orientated with respect to the path of travel independently of the other groups of sample holders whereby individual sample holders within that discrete group are caused to traverse different selected tracks within the overall path of travel of the said discrete group; and

c). in that the orientation of the sample holders in the said discrete group is altered at least once during each complete circuit of the path by the discrete group whereby a sample holder in the said group is caused to traverse a different track within the overall path upon successive circuits of the path.

Preferably, the discrete groups of sample holders are each carried on a primary rotating mechanism, several of which latter are mounted on a secondary rotating mechanism having an axis of rotation parallel to but spaced from that of the primary mechanism. The rotating mechanisms are caused to rotate so that the sample holders precess around the axis of rotation of the secondary mechanism. The rotation of the primary and secondary mechanisms can be continuous. However, it is preferred that the primary mechanism is caused to rotate intermittently through only part of a complete revolution for each complete revolution of the secondary mechanism. In this way so that successive sample holders on each primary mechanism are brought into a given position with respect to work stations located around the overall annular path traversed by the primary mechanisms as they are carried by the secondary mechanism. In a particulary preferred form of apparatus for use in the method of the invention, the primary mechanisms takes the form of a series of rotatable tables, each carried on suitable bearing means adjacent the free ends of the radial arms of a rotating spider type of mechanism.

The primary mechanism can be rotated continuously with the secondary mechanism, as when the two are geared together or interlinked, eg. by a friction drive or by engagement of the support shaft for the primary rotating table with a gear ring, the secondary mechanism merely serving to drive the primary mechanism around a circular track in engagement with that gear ring. However, this imposes restrictions on the points at which a given sample holder on the primary mechanism passes under a sample work station. It is therefore preferred to cause the primary mechanism to rotate through less than $360°$, eg. $360/n°$ where n is the number of sample holders carried by that primary mechanism, for each complete revolution of the secondary mechanism. This rotation preferably occurs at one point on the travel of the secondary mechanism, for example by engagement of the primary mechanism with a friction pad, gear wheel, stop or other mechanism so that the group of sample holders carried on that primary mechanism is rotated a discrete amount each time so as to bring each sample holder in succession into register with a given track on the overall path traversed by the secondary mechanism. Typically, the rotation of the primary mechanism is caused by the engagement of a star wheel on the support shaft for the rotatable table of the primary mechanism with a fixed stop or post which lies in the path of the primary mechanism. Alternatively, a pusher bar or the like can engage with an arm or post carried by the primary mechanism so as to rotate it at the desired point.

The rotation of the primary and secondary mechanisms causes individual sample holders to follow different tracks within the overall path traversed by the groups of holders carried by the primary mechanism. By suitable selection of the speed of rotation of the secondary mechanism, the extent to which the primary mechanism is rotated at each actuation and the location of the work stations on each track, it is possible to caused the sample holders to follow a tortuous path passing a number of work stations separated by different time intervals. The method can thus be used to subject each sample to a series of tests or the like at controlled intervals and/or in a controlled sequence. The exact line of travel followed by a given sample can be selected by simple mechanical adjustments and, once the apparatus is set up, all subsequent samples will follow the same path and will therefore be subjected to the same test sequence. The apparatus can thus be set up by a suitably experienced operator and subsequent operation left in the hands of unskilled operators. This is of particular value in under-developed countries where suitably qualified operators, for example of blood analysis units, are not readily available.

Where it is desired to ensure a given interval between work stations, for example where a reagent must remain in contact with a sample for a given time before that mixture is tested, this can be readily achieved by varying the path followed by the sample and/or by moving the work station in either direction along the track it serves. Where a complex sample treatment is required, it may be desired to rotate the primary mechanism at several points during a complete rotation of the secondary mechanism and those rotations need not all be in the same sense.

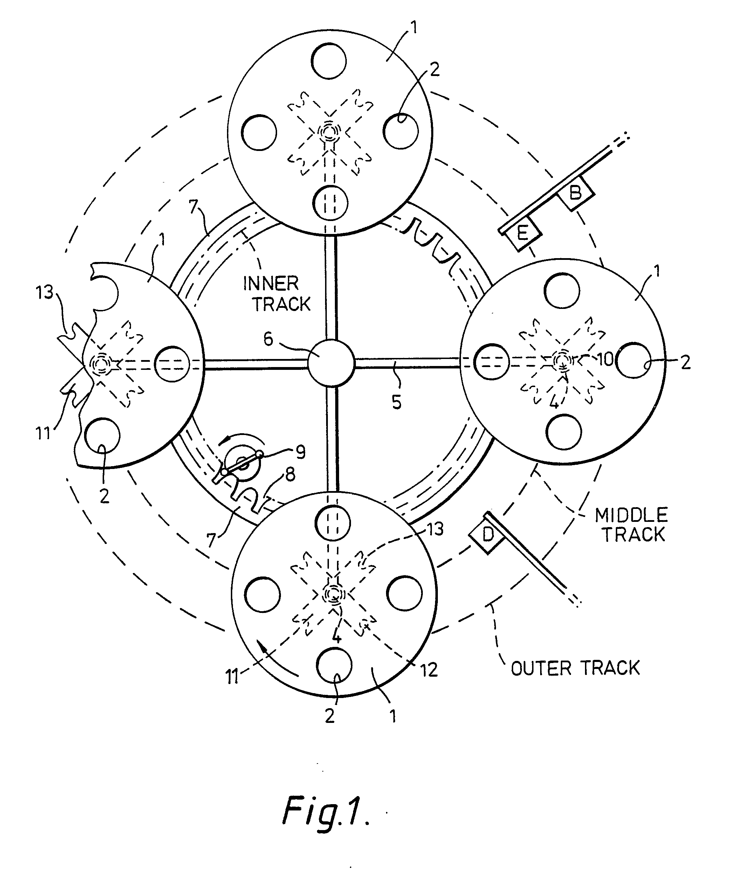

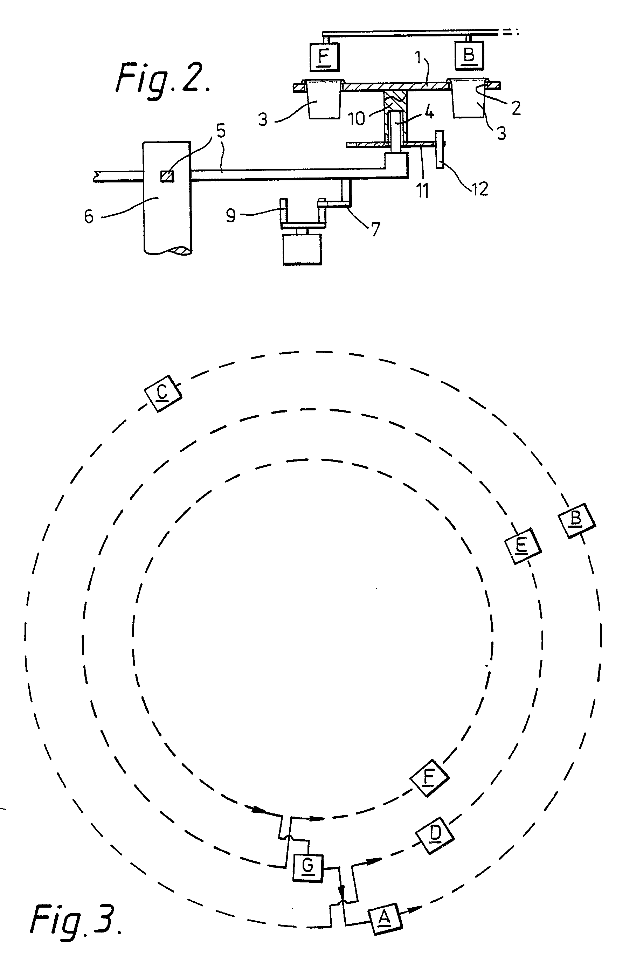

To aid understanding of the invention, it will be described by way of illustration only with respect to a preferred form thereof as shown in the accompanying drawings in which Figure 1 is a diagrammatic plan view from above of apparatus for carrying the sample holders, Figure 2 is a side view of part of the apparatus of Figure 1 and Figure 3 is a diagrammatic representation of the path followed by a single sample holder through part of a sample treatment cycle.

The apparatus comprises a substantially horizontal circular rotatable sample table 1 (the primary mechanism) having a series of sample holder apertures 2 located substantially symmetrically at or adjacent its periphery. The number of apertures 2 can be varied to suit the size and complexity of the sample testing cycle. Typically, there will be from 3 to 8 apertures to each table 1. The apertures are adapted to receive sample holders 3 as a loose fit. Typically, the sample holders are frusto-conical plastic cups or the like which have a projecting rim around the lip of the open top to the cup which rests upon the lip of the aperture 2 to support and locate the sample holder in the aperture.

The table 1 is mounted on a substantially vertical shaft 4 or by other means which permit the table to rotate about its axis. The shaft 4 is carried by a secondary rotating mechanism which rotates about a second axis of rotation substantially parallel to but removed from the axis of rotation of the table. This secondary mechanism can be a second horizontal table with the tables 1 carried at substantially uniform intervals around its periphery. However, as shown in Figure 1, the secondary mechanism preferably takes the form of a series of arms 5 extending radially from a central hub 6 journalled on a second substantially vertical shaft. The shafts 4 carrying the tables 1 are mounted either fixedly or freely rotatably adjacent the free ends of the arms 5.

The spider structure formed by the arms 5 and the hub 6 is rotated at a suitable speed by any suitable means. Thus, the hub may be driven directly or via suitable gearing or the like from an electric motor. In a particularly preferred form of the apparatus, a circumferential drive ring 7 is mounted adjacent the free ends of the arms 5 and a drive mechanism engages that ring. Thus, the drive ring 7 can carry gear teeth or the like which engage with drive teeth on a motor shaft or a toothed drive belt. Alternatively, the ring 7 can have a plurality of radial grooves 8 therein which are engaged by upright pins or rollers 9 carried by a motor shaft in what is known as a Geneva drive. This latter form of drive ensures positive mechanical drive of the spider structure in a series of discrete steps, thus aiding accurate register of the tables 1 with the work stations.

The table 1 is provided with means for intermittently rotating the table through the desired angular rotation to carry a sample holder 3 from one position to the next. In the case shown in Figure 1, the table is rotated through 90° or a sub-multiple thereof since there are four sample apertures 2 in the table. As indicated above, the rotation is preferably carried out once per complete revolution of the spider assembly, for example between the point at which a sample holder whose contents have completed the test cycle is discharged and the point at which a sample holder containing a new sample to be tested is fed to the empty aperture, as described below. However, the rotation could be achieved elsewhere and/or further rotations of table 1 can be carried out at other points in the test cycle.

Rotation of table 1 is conveniently achieved by the engagement between a static detent member and part of the table. Thus, table 1 can be mounted on shaft 4 by means of a dependant bearing tube 10 which carries a radially extending star wheel or four arms 11 which engage an upstanding post 12 on the framework of the apparatus. As table 1 is carried past post 12 by the rotation of the spider assembly, post 12 engages one of the arms 11 and causes table 1 to rotate. Preferably, each arm 11 is provided with an axial slot 13 into which post 12 engages, so as to ensure that table 1 does not rotate excessively due to a sharp impact between post 12 and arm 11. Arm 11 and the position of post 12 are selected so that table 1 is rotated through the desired angle.

With the construction shown in Figure 1, the apertures 2 in table 1 pass through four positions as the table is rotated stepwise through 90° at a time. As a result, the sample holders 3 follow three concentric circular tracks about the axis of rotation of the hub 6; an inner, a middle and an outer track. These reflect the radial positions relative to the axis of rotation of the hub 6 which correspond to the positions of the sample holders at 0°, 90° (and 270°) and 180° rotation of table 1. As table 1 is rotated, a sample holder is transferred from one track to the adjacent one, firstly radially inwardly, then radially outwardly.

Above the tracks are mounted suitable test and/or sampling stations which co-operate with the passage of a sample holder beneath them. Thus, a sample holder containing a dry soil sample can be fed to an empty aperture 2 at the 0° position of table 1 from a suitable magazine feeder station A. The spider assembly rotates carrying the sample holder around the outer track to a water filling station B, followed by a stirring station C. The stirred sample is allowed to mature for a period corresponding to a half rotation of the spider assembly. During this half turn, table 1 passes post 12 and is caused to rotate through 90°. This carries the sample holder inwardly from the outer track to the middle track and to a pH measuring station D at which a pH probe is dipped into the sample and the pH is measured using conventional techniques. The sample holder then procedes to a further stirring station E before a sample is drawn off for chemical analysis at station F lying on the inner track. Further tests can be carried out on the sample before the sample holder passes to a discharge station G. The sample holder can be discharged from the table 1 by any suitable means. Thus, a pusher can be extended upwards at station G to engage the base of the sample cup and raise it sufficiently for a grab mechanism to grip the upper portion of the cup and withdraw it from the aperture and discharge it laterally into a disposal chute or the like. The emptied aperture is then carried to feeder station A to receive a new sample in its holder to repeat the cycle.

The design and operation of the test or sampling equipment at the various stations along the path of travel of the sample can be conventional. However, the method of the invention permits one sample to be subjected to a number of tests in sequence as it passes along the total line of travel, whereas it has hitherto been the practice to subject separate samples to individual tests using different pieces of apparatus. The positioning of the test stations along the path of travel can be varied to suit the desired time intervals between the stations and/or the sequence in which the tests are to be carried out.

The apparatus described above can be used for a wide range of types of sample testing and analysis, but is of especial benefit where the volume of the sample being tested exceeds 100 ml, notably in soil analysis. The invention therefore provides a method of the invention applied to the testing and/or analysis of soil samples in which the individual sample volume carried in each sample holder exceeds 100 ml.

The invention also provides apparatus for use in the method of the invention which apparatus comprises means for transporting a plurality of discrete groups of at least two sample holders around an overall path so as to bring the individual sample holders in each group into register with one or more work stations co-operating with the path of travel; means for re-orientating each discrete group of sample holders independently of other groups of sample holders with respect to the path of travel whereby individual sample holders within that group can be caused to traverse different selected tracks within the overall path of travel of the said group, the said re-orientating means being adapted to operate at least once during each complete circuit of the path by the group whereby a sample holder in the said group can be caused to traverse a different track within the overall path upon successive traverses of the path.

## Claims

1. A method for presenting a sample in a holder 3 to a work station A, B, C, D, E, F at which some function is to be performed on the sample, which method comprises transporting sample holders 3 around an overall path so as to bring individual sample holders 3 into register in sequence with one or more work stations A, B, C, D, E, F co-operating with the path of travel characterised in that:

a). the sample holders 3 are transported around the path of travel as at least two discrete groups of at least two sample holders 3 in each discrete group;

b). in that each discrete group of sample holders 3 is re-orientated with respect to the path of travel independently of the other groups of sample holders 3 whereby individual sample holders 3 within that discrete group are caused to traverse different selected tracks within the overall path of travel of the said discrete group; and

c). in that the orientation of the sample holders 3 in the said discrete group is altered at least once during each complete circuit of the path by the discrete group whereby a sample holder 3 in the said group is caused to traverse a different track within the overall path upon successive circuits of the path.

2. A method as claimed in claim 1 wherein the discrete groups of sample holders 3 are each carried on a primary rotating mechanism 1, 2, 10, and a plurality of the latter are mounted on a secondary rotating mechanism 4, 5, 6 having an axis of rotation 6 parallel to but spaced from that of the primary mechanism 4, whereby the sample holders 3 are caused to precess around the axis of rotation 6 of the secondary mechanism 4, 5, 6.

3. A method as claimed in claim 2 wherein the primary mechanism 1, 2, 10 is caused to rotate intermittently through only part of a complete revolution for each complete revolution of the secondary mechanism 4, 5, 6 whereby successive sample holders 3 on each primary mechanism 1, 2, 10 are brought into a given position with respect to work stations A, B, C, D, E, F located around the overall annular path traversed by the primary mechanisms 1, 2, 10 as they are carried by the secondary mechanism 4, 5, 6.

4. A method as claimed in any one of claims 1 to 3 wherein the sample holders 3 each hold a sample of more than 100 mls size.

5. A method for the analysis of soil samples wherein a soil sample is carried in each of the sample holders in a method as claimed in any one of the preceding claims so as to bring the sample into registry with a series of soil analysis work stations A, B, C, D, E, F.

6. Apparatus for use in the method of claim 1 which apparatus comprises means 1, 2, 10, 4, 5, 6 for transporting a plurality of discrete groups of at least two sample holders 3 around an overall path so as to bring the individual sample holders 3 in each group into register with one or more work stations A, B, C, D, E, F co-operating with the path of travel; means 11, 12, 13 for re-orientating each discrete group of sample holders 3 independently of other groups of sample holders 3 with respect to the path of travel, whereby individual sample holders 3 within that group can be caused to traverse different selected tracks within the overall path of travel of the said group, the said re-orientating means being adapted to operate at least once during each complete circuit of the path by the group whereby a sample holder 3 in the said group can be caused to traverse a different track within the overall path upon successive traverses of the path.

7. Apparatus as claimed in claim 6 wherein each group of sample holders 3 is carried upon a substantially horizontal table 1 rotatable about a substantially vertical axis 10, each table 1 being carried adjacent the free end of an arm 6 of a spider assembly comprising a series of arms extending radially from a hub 6 rotatable about a substantially vertical axis.

8. Apparatus as claimed in claim 6 wherein the means 11, 12, 13 for re-orientating the groups of sample holders 3 comprises means 12, 13 for causing the tables 1 each to rotate intermittently through less than $360°$ for each rotation of the spider assembly about its vertical axis of rotation.

9. Apparatus as claimed in claim 6 wherein the rotation of the table 1 is achieved by a detent mechanism 11, 12, 13 which causes the table 1 to rotate through $360/n°$ where $n$ is the number of sample holders 3 carried by each table 1.

10. Apparatus for use in the method of claim 1 which comprises a spider assembly 4, 5, 6 having a series of generally horizontal arms 5 extending radially from a hub 6 rotatable about a generally vertical axis; the free end 4 of each arm carrying a generally horizontal table 1 rotatable about a generally vertical axis 4; the tables 1 having means 2 for receiving and carrying a group of sample holders 3 thereon; and means 11, 12, 13 operatively connected to the tables 1 whereby the tables 1 can individually be rotated at predetermined points during rotation of the spider assembly 4, 5, 6 so that the orientation of the tables I can be varied to ensure that each sample holder 3 carried by the table 1 traverses a path whose radius about the axis of rotation 6 of the spider assembly 4, 5, 6 varies by stepwise increments or decrements as the table 1 is rotated.

11. Apparatus as claimed in claim 10 wherein each table carries radially extending arms operatively associated therewith which engage with a stationary detent means so as to cause the table to be rotated as the spider rotates and carries the arm of the table through the detent means.

Amended claims in accordance with Rule 86(2) EPC.

1. A method for presenting a sample in a holder to a work station (A,B,C,D,E,F) at which some function is to be performed on the sample, which method comprises transporting groups of sample holders (3) around an overall path of travel so as to bring individual sample holders (3) into register in sequence with one or more work stations in operative association with the path of travel, characterised in that:

a. the sample holders (3) are transported around the path of travel as at least two discrete groups of at least two sample holders (3) in each discrete group, each of which groups is carried on an individual primary rotatable mechanism (1,2,10), each such mechanism being rotatable about first axes of rotation (4) indepedently of the others of said groups;

b. the said groups are carried around the overall path of travel by a secondary transport mechanism (4,5,6), rotatable about a second axis (6) displaced from but parallel to said first axes (4);

c. at least one of said groups is caused to rotate independently of said other groups about its said first axis (4) at least once during each rotation of the secondary transport mechanism (4,5,6), whereby the individual sample holders (3) in the said group are caused to traverse different tracks within the said overall travel path upon successive rotations of the said secondary transport mechanism (4,5,6).

2. A method as claimed in claim 1 characterised in that the primary mechanism (1,2,10) is caused to rotate intermittently through only part of a complete revolution for each complete revolution of the secondary mechanism (4,5,6) whereby successive sample holders (3) on each primary mechanism (1,2,10) are brought into a given position with respect to work stations (A,B,C,D,E,F) located around the overall annular path traversed by the primary mechanisms (1,2,10) as they are carried by the secondary mechanism (4,5,6).

3. A method as claimed in claim 1 characterised in that the sample holders (3) are each capable of holding a sample of more than 100 mls size.

4. A method for the analysis of soil samples characterised in that a soil sample is carried in each of the sample holders (3) in a method as claimed in claim 1 so as to bring the sample into registry with a series of soil analysis work stations (A,B,C,D,E,F).

5. Apparatus which is characterised in that it comprises a spider assembly (5,6) having a series of generally horizontal arms (5) extending radially from a hub (6) rotatable about a generally vertical axis (6); the free end of each arm (5) carrying a generally horizontal table (1) rotatable about a generally vertical axis (10,4); the tables (1) having means (2,3) for receiving and carrying a group of sample holders (3) thereon; and means (11,12,13) operatively associated with the tables (1) whereby the tables (1) can individually be rotated at predetermined points during rotation of the spider assembly (5,6) so that the orientation of the tables (1) can be varied to ensure that each sample holder (3) carried by the table (1) traverses a path whose radius about the axis of rotation (6) of the spider assembly (5,6) varies stepwise as the table (1) is rotated.

6. Apparatus as claimed in claim 5 characterised in that the means (11,12,13) for re-orientating the groups of sample holders (3) comprises means (11,12,13) for causing the tables (1) each to rotate intermittently through less than 360° for each rotation of the spider assembly (5,6) about its vertical axis of rotation (6).

7. Apparatus as claimed in claim 5 characterised in that each table (1) is operatively associated with radially extending arms (11,13) which engage with a stationary detent means (12) so as to cause the table (1) to be rotated as the spider assembly (5,6) rotates and carries the arm (11) of the table (1) past the detent means (12).

8. Apparatus as claimed in claim 7 characterised in that the detent means (12) causes the table (1) to rotate through 360/n° where n is the number of sample holders (3) carried by each table (1).

*Fig.1.*

Fig.2.

Fig.3.

European Patent Office

**EUROPEAN SEARCH REPORT**

Application Number

EP 87 31 0503

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| E | GB-A-2 190 889 (P. WRIGHT)<br>* Whole document * | 1-11 | G 01 N 35/04 |
| X | US-A-3 883 306 (J.A. WIDEN)<br>* Figures 1-5; column 1, lines 12-15,33-40; column 2, lines 49-61; column 3, lines 6-9,44-48,55-58; column 4, lines 42-54 * | 1,6 | |
| A | US-A-4 699 766 (K. YAMASHITA)<br>* Figures 1-3; column 2, lines 1-12; column 3, lines 7-9,30-33,48-50; column 4, lines 38-49; column 5, lines 47-56 * | 1,6 | |
| A | US-A-3 467 500 (R.J. WILKINSON)<br>* Figure 3; column 2, lines 60-64; column 4, lines 30-34 * | 8,9 | |

TECHNICAL FIELDS SEARCHED (Int. Cl.4)

G 01 N

The present search report has been drawn up for all claims

| Place of search | Date of completion of the search | Examiner |
|---|---|---|
| THE HAGUE | 20-07-1988 | HOCQUET A.P.E. |

EPO FORM 1503 03.82 (P0401)